(19) Europäisches Patentamt
European Patent Office
Office européen des brevets

(11) **EP 3 389 164 B1**

(12) **EUROPEAN PATENT SPECIFICATION**

(45) Date of publication and mention of the grant of the patent:
**13.05.2020 Bulletin 2020/20**

(51) Int Cl.:
***H02K 1/16*** *(2006.01)* ***H02K 7/18*** *(2006.01)*
***H02K 11/01*** *(2016.01)*

(21) Application number: **18163509.5**

(22) Date of filing: **23.03.2018**

(54) **ELECTRICAL GENERATOR HAVING REDUCED BEARING CURRENTS**

ELEKTRISCHER GENERATOR MIT REDUZIERTEN LAGERSTRÖMEN

GÉNÉRATEUR ÉLECTRIQUE À COURANTS DE PALIER RÉDUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2017 DE 102017206216**

(43) Date of publication of application:
**17.10.2018 Bulletin 2018/42**

(73) Proprietor: **Siemens Gamesa Renewable Energy A/S**
**7330 Brande (DK)**

(72) Inventor: **Wadsholt, Klaus**
**7000 Fredericia (DK)**

(74) Representative: **Aspacher, Karl-Georg**
**Siemens Wind Power GmbH & Co. KG**
**Postfach 22 16 34**
**80506 München (DE)**

(56) References cited:
**EP-A1- 2 822 157 US-A1- 2005 110 361**

- **ADABI J ET AL: "Calculations of capacitive couplings in induction generators to analyse shaft voltage", THE INSTITUTION OF ENGINEERING AND TECHNOLOGY. JOU,, vol. 3, no. 3, 1 May 2010 (2010-05-01), pages 379-390, XP006035159, ISSN: 1755-4543, DOI: 10.1049/IET-PEL:20080332**

EP 3 389 164 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of invention

The present invention relates to an electric generator for reducing an electric current flowing between a rotor and a stator of the electrical generator via one or more bearings. Such electric current is normally called "bearing current". Furthermore, the invention relates to a method to reduce the bearing current in an electric generator.

Art Background

An electrical generator, such as an electric generator installed in a wind turbine, typically comprises a rotor which rotates relative to a stator. The rotor and the stator are connected to each other via bearings, such as e.g. a roller bearing, a tapered bearing, a hydrostatic bearing or a hydrodynamic bearing.

A voltage may occur over the bearing, e.g. due to capacitive coupling of a common mode voltage of an inverter from a winding to the rotor. However, the bearing currents resulting from such a voltage may jeopardize the lifetime of the bearing and may in some situations cause immediate damage to the bearing. This may lead to a bearing failure and to a decreased life span of the electrical machine.

It cannot completely be avoided the occurrence of bearing currents. In addition, the bearings are primarily designed to carry or support an electric current.

Therefore, there is still a need to provide an improved way to reduce the common mode electric current flowing between a rotor and a stator of an electrical machine via the bearings.

US2005/0110361 A1 discloses a stator of a dynamoelectric machine where a portion of the frame body is radially interposed between only a part of the winding and the rotor. EP 2822157 A1 discloses slots where a first radially external portion of the slot has a smaller circumferential extension than the first radially internal portion of the slot. While in these documents there is a reduction of the mentioned common mode electric current, there is a need to further reduce it.

Summary of the invention

This need may be met by the subject matter according to the independent claims. Advantageous embodiments of the present invention are described by the dependent claims.

According to a first aspect of the invention, it is provided an electric generator according to claim 1.

The above described electric generator may be advantageously integrated in a wind turbine.

According to a second aspect of the invention, it is provided a method of manufacturing an electrical generator according to claim 4.

Advantageously, the present invention allows reducing the bearing currents by shielding the coupling between stator and rotor. The invention utilizes the lamination of the teeth of the stator by shifting the first portion of the stator slot (i.e. the portion of the slot radially directing facing the rotor) where the slot entrance is shifted to the right (or left). By doing so the capacitance from winding to rotor is reduced.

According to an embodiment of the invention, the electric generator the first portion and the second portion are shifted with respect to each other in such a way that at least a portion of the frame is radially interposed between the winding and the rotor. Advantageously, in such a way the winding in the second portion of the slot are not completely radially facing the rotor, as in solutions of the prior art, thus reducing the capacitance from winding to rotor of the electric generator.

The first portion and the second portion is shifted respect to each other along a direction orthogonal to a rotational axis of the rotor relative to the stator, i.e. clockwise or counter - clockwise.

According to a further embodiment of the invention, the first portion is geometrically configured in order to symmetric with respect to a first radial symmetry plane and the second portion is geometrically configured in order to symmetric with respect to a second radial symmetry plane, the first radial symmetry plane and the second radial symmetry plane being shifted respect to each other along a direction orthogonal to a rotational axis of the rotor relative to the stator.

By simply shifting the two portions of the slots relatively to each other, it is advantageously possible to use the same windings and wedges, which are used in solutions of the prior art.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited. The scope of the invention is defined by the claims.

Brief Description of the Drawing

| | |
|---|---|
| Figure 1 | shows a wind turbine comprising an electric generator in accordance with an embodiment of the invention. |
| Figure 2 | shows a first schematic partial cross section of an electric generator in accordance with an embodiment of the invention. |
| Figure 3 | shows a second schematic partial cross section of an electric generator in accordance with the same embodiment of the invention in Figure 2. |
| Figure 4 | shows an equivalent electric circuit diagram for an electrical generator in the invention. |
| Figure 5 | shows a schematic partial cross section of an electric generator in accordance with the prior art. |

Detailed Description

The illustrations in the drawings are schematic. It is noted that in different figures, similar or identical elements are provided with the same reference signs.

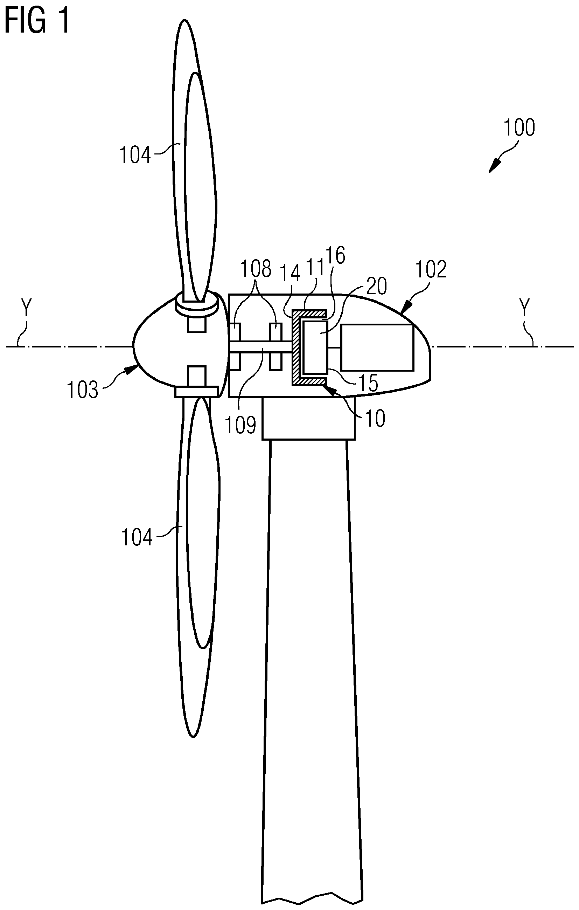

Figure 1 shows a wind turbine 100 according to the invention The wind turbine 100 comprises a tower 101, which is mounted on a non-depicted fundament. A nacelle 102 is arranged on top of the tower 101.

The wind turbine 100 further comprises a wind rotor 103 having three blades 104 (in the perspective of Figure 1 only two blades 104 are visible). The wind rotor 103 is rotatable around a rotational axis Y. When not differently specified, the terms axial, radial and circumferential in the following are made with reference to the rotational axis Y. The blades 104 extend radially with respect to the rotational axis Y.

The wind turbine 100 comprises an electric generator 10, which includes a stator 20 and a rotor 11.

According to other possible embodiment of the present invention, the electric generator 10 not included in a wind turbine.

The wind rotor 103 is rotationally coupled with the rotor 3 by means of a rotatable shaft 109. A schematically depicted bearing assembly 108 is provided in order to hold in place both the wind rotor 103 and the rotor 11. As can be seen from Figure 1 the rotatable shaft 109 extends along the rotational axis Y.

The electric generator 10 extends along the rotational axis between an axial drive end 14 and an axially opposite non-drive end 15. The drive end 14 is connected to the rotatable shaft 109 of the wind turbine 100. The rotational axis Y is also coincident with an axis of rotation of the rotor 11 around the stator 20. Bearings of the bearing assembly 108 may be present at one or both of the axial drive end 14 and of the non-drive end 15.

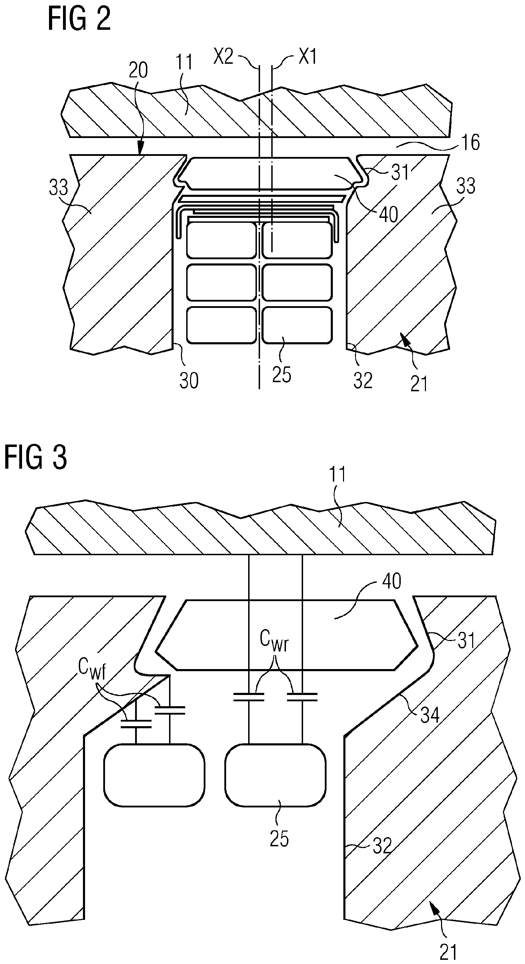

As shown in Figure 2 and Figure 3, the stator 20 comprises a frame body 21 having a plurality of slots 30 (only one slot 30 is shown in the Figures 2 and 3) and a plurality of teeth 33 (only two teeth 33 are shown in the Figures 2 and 3) being circumferentially alternated between the plurality of slots 30. The teeth 33 and, consequently, the slots 30 between them are manufactured by lamination.

Each slot 30 houses a respective winding 25 and a wedge 40. Each wedge 40 protects and keeps in place the respective winding 25. In order to respectively house the wedge 40 and the winding 25, the slot 30 has a first portion 31 radially facing the rotor 11 and a second portion 32, which is adjacent to the first portion 31 and more remote from the rotor 11 than the first portion 31.

The first portion 31 is geometrically configured in order to be symmetric with respect to a first radial symmetry plane X1 and the second portion 32 is geometrically configured in order to be symmetric with respect to a second radial symmetry plane X2.

The rotor 11 is arranged around the stator 20 and is rotatable relative to the stator 20, around the rotational axis Y.

An air gap 16, which extends circumferential around the axis Y, is provided between the rotor 11 and the stator 20.

According to another embodiment of the present invention (not represented in the attached figures) the stator 20 is arranged around the rotor 11.

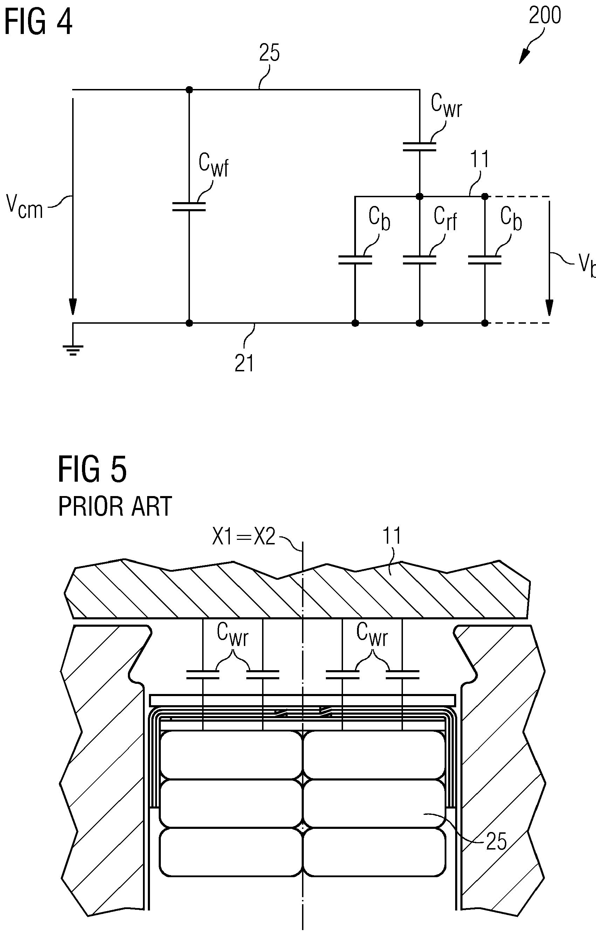

Figure 4 shows an equivalent electric circuit diagram 200 for the electrical generator 10. The stator winding 25, the rotor 11 and the frame body 21 are also schematically indicated. The capacitance between winding 25 and frame body 21 is $C_{wf}$, the capacitance between winding 25 and rotor 11 is $C_{wr}$ and the capacitance between rotor 11 and frame body 21 is shown as a parallel coupling of $C_{rf}$ and two bearing capacitances $C_b$.

According to another embodiment of the present invention (not represented in the attached figures) only a single bearing may be used and therefore also in the equivalent electric circuit only one bearing capacitance $C_b$ is used.

It is therefore assumed that the bearing capacitance $C_b$ at the drive end 14 has the same value of the bearing capacitance $C_b$ at the non-drive end 15 of the electric generator 10. However, as it will be clearer in the following the present invention applies independently from the values and distribution of the bearing capacitances $C_b$.

When a common mode voltage $V_{cm}$ occurs between the winding 110 and the grounded frame 130, the bearing voltage $V_b$ is given as:

$$V_b = V_{cm} * C_{wr} / (C_{wr} + C_{rf} + 2 * C_b).$$

In the embodiments where only one bearing capacitance $C_b$ is used, the bearing voltage $V_b$ is given as:

$$V_b = V_{cm} * C_{wr} / (C_{wr} + C_{rf} + C_b).$$

From the above expression, it is evident that $V_b$ can be reduced by reducing the capacitance $C_{wr}$ between winding 25 and rotor 11.

The present invention achieves this because the first portion 31 and the second portion 32 are geometrically configured with respect to each other in such a way that at least a portion of the frame 21 is radially interposed between the winding 25 and the rotor 11.

As shown in the embodiment of Figure 2 and Figure 3, the first portion 31 and the second portion 32 are circumferentially (i.e. orthogonally to the rotational axis Y) shifted with respect to each other in such a way that at least a portion of the frame 21 is radially interposed between the winding 25 and the rotor 11. The first radial symmetry plane X1 and the second radial symmetry plane X2 are also shifted with respect to each other along a circumferentially direction orthogonal to the rotational axis Y.

As a result, an upper part 34 of the second portion 32 directly connected to the first portion 31 is deformed in the same direction of the shifting of the first portion 31 of the slot. Such upper part 34 of the second portion 32 of the slot 33 shields a portion of the winding 25, in such a way that upper part 34 of the second portion 32 is radially interposed between such portion of the winding 25 and the rotor 11. Such portion of the winding 25 is not completely radially facing the rotor 11, as in solutions of the prior art solution shown in Figure 5, thus reducing the capacitance $C_{wr}$ from winding to rotor of the electric generator 10. At the same time the capacitance $C_{wf}$ between winding 25 and frame body 21 is increased.

The prior art solution in Figure 5 shows a prior art stator where the first portion for housing the wedge 40 and the second portion for housing the winding 25 are not shifted to each other, the first radial symmetry plane X1 and the second radial symmetry plane X2 being coincident.

The manufacturing of the teeth 33 of the stator 20 by lamination permits achieving the shape of the slots 30 required by the present invention in a fast and cost effective way.

## Claims

**1.** Electrical generator (10) comprising:

- a stator (20) having a frame body (21) and a plurality of slots (30) in the frame body (21) for housing a winding (25),
- a rotor (11) arranged to be rotatable relative to the stator (20), the slots (30) having at least a first portion (31) for housing a wedge (40) radially facing the rotor (11) and a second portion (32) for housing the winding (25) adjacent to the first portion (31), the winding (25) being housed in the second portion (32) of the slot,

the first portion (31) being circumferentially shifted with respect to the second portion (32) in such a way that at least a portion of the frame body (21) is radially interposed between the winding (25) and the rotor (11),
an upper part (34) of the second portion (32) directly connected to the first portion (31) is deformed in the same direction of the shifting of the first portion (31), **characterized in that** the upper part (34) is radially interposed between the winding (25) and the rotor (11).

**2.** Electric generator (10) as claimed in claim 1, wherein the first portion (31) is geometrically configured in order to be symmetric with respect to a first radial symmetry plane (X1) and the winding (25) is geometrically configured in order to be symmetric with respect to a second radial symmetry plane (X2), the first radial symmetry plane (X1) and the second radial symmetry plane (X2) being shifted with respect to each other along a direction orthogonal to a rotational axis (Y) of the rotor (11) relative to the stator (20).

**3.** Wind turbine (100) including an electric generator (10) as claimed in any of the preceding claims.

**4.** Method of manufacturing an electrical generator (10) comprising:

- a stator (20) having a frame body (21) and a plurality of slots (30) in the frame body (21) for housing a winding (25), a plurality of teeth (33) being circumferentially alternated between the plurality of slots (30),
- a rotor (11) arranged to be rotatable relative to the stator (20), the slots (30) having at least a first portion (31) for housing a wedge (40) radially facing the rotor (11) and a second portion (32) for housing the winding (25) adjacent to the first portion (31), the winding (25) being housed in the second portion (32) of the slot,

the first portion (31) and the second portion (32) being shifted with respect to each other in such a way that at least a portion of the frame body (21) is radially interposed between the winding (25) and the rotor (11),
an upper part (34) of the second portion (32) directly connected to the first portion (31) is deformed in the same direction of the shifting of the first portion (31) of the slot, **characterized in that** the upper part (34) being radially interposed between the winding (25) and the rotor (11).

5. Method of manufacturing an electrical generator (10) according to claim 4, wherein the method includes the step of obtaining the teeth (33) by lamination.

## Patentansprüche

1. Elektrischer Generator (10), der Folgendes umfasst:

- einen Stator (20) mit einem Gehäuseteil (21) und mehreren Nuten (30) in dem Gehäuseteil (21) zum Unterbringen einer Wicklung (25),
- einen Rotor (11), der so angeordnet ist, dass er in Bezug auf den Stator (20) drehbar ist, wobei die Nuten (30) zumindest einen ersten Abschnitt (31) zum Unterbringen eines Keils (40), der dem Rotor (11) radial zugewandt ist, und einen zweiten Abschnitt (32) zum Unterbringen der Wicklung (25) neben dem ersten Abschnitt (31) aufweisen, wobei die Wicklung (25) in dem zweiten Abschnitt (32) der Nut untergebracht ist,

wobei der erste Abschnitt (31) in Bezug auf den zweiten Abschnitt (32) in Umfangsrichtung so versetzt ist, dass zumindest ein Abschnitt des Gehäuseteils (21) radial zwischen der Wicklung (25) und dem Rotor (11) angeordnet ist, wobei ein oberer Teil (34) des zweiten Abschnitts (32), der direkt mit dem ersten Abschnitt (31) verbunden ist, in der Richtung des Versatzes des ersten Abschnitts (31) verformt ist,
**dadurch gekennzeichnet, dass**
der obere Teil (34) radial zwischen der Wicklung (25) und dem Rotor (11) angeordnet ist.

2. Elektrischer Generator (10) nach Anspruch 1, wobei der erste Abschnitt (31) geometrisch so konfiguriert ist, dass er in Bezug auf eine erste radiale Symmetrieebene (X1) symmetrisch ist, und die Wicklung (25) geometrisch so konfiguriert ist, dass sie in Bezug auf eine zweite radiale Symmetrieebene (X2) symmetrisch ist, wobei die erste radiale Symmetrieebene (X1) und die zweite radiale Symmetrieebene (X2) in Bezug zueinander in einer Richtung versetzt sind, die orthogonal zu einer Drehachse (Y) des Rotors (11) in Bezug zum Stator (20) verläuft.

3. Windenergieanlage (100) mit einem elektrischen Generator (10) nach einem der vorhergehenden Ansprüche.

4. Verfahren zum Fertigen eines elektrischen Generators (10), der Folgendes umfasst:

- einen Stator (20) mit einem Gehäuseteil (21) und mehreren Nuten (30) in dem Gehäuseteil (21) zum Unterbringen einer Wicklung (25), wobei sich die mehreren Nuten (30) in Umfangsrichtung mit mehreren Zähnen (33) abwechseln,
- einen Rotor (11), der so angeordnet ist, dass er in Bezug auf den Stator (20) drehbar ist, wobei die Nuten (30) zumindest einen ersten Abschnitt (31) zum Unterbringen eines Keils (40), der dem Rotor (11) radial zugewandt ist, und einen zweiten Abschnitt (32) zum Unterbringen der Wicklung (25) neben dem ersten Abschnitt (31) aufweisen, wobei die Wicklung (25) in dem zweiten Abschnitt (32) der Nut untergebracht ist,

wobei der erste Abschnitt (31) und der zweite Abschnitt (32) so zueinander versetzt sind, dass zumindest ein Abschnitt des Gehäuseteils (21) radial zwischen der Wicklung (25) und dem Rotor (11) angeordnet ist,
wobei ein oberer Teil (34) des zweiten Abschnitts (32), der direkt mit dem ersten Abschnitt (31) verbunden ist, in der Richtung des Versatzes des ersten Abschnitts (31) der Nut verformt ist,
**dadurch gekennzeichnet, dass**
der obere Teil (34) radial zwischen der Wicklung (25) und dem Rotor (11) angeordnet ist.

**5.** Verfahren zum Fertigen eines elektrischen Generators (10) nach Anspruch 4, wobei das Verfahren das Herstellen der Zähne (33) durch Lamellierung umfasst.

## Revendications

**1.** Générateur électrique (10) comprenant :

- un stator (20) ayant un corps de carcasse (21) et une pluralité de fentes (30) dans le corps de carcasse (21) pour loger un enroulement (25),
- un rotor (11) agencé pour être rotatif par rapport au stator (20), les fentes (30) ayant au moins une première partie (31) pour loger une cale (40) faisant radialement face au rotor (11) et une seconde partie (32) pour loger l'enroulement (25) de manière adjacente à la première partie (31), l'enroulement (25) étant logé dans la seconde partie (32) de la fente,

la première partie (31) étant décalée de manière circonférentielle par rapport à la seconde partie (32) d'une manière telle qu'au moins une partie du corps de carcasse (21) est radialement interposée entre l'enroulement (25) et le rotor (11),
une partie supérieure (34) de la seconde partie (32) directement reliée à la première partie (31) est déformée dans la même direction du décalage de la première partie (31),
**caractérisé en ce que** la partie supérieure (34) est radialement interposée entre l'enroulement (25) et le rotor (11).

**2.** Générateur électrique (10) selon la revendication 1, dans lequel la première partie (31) est géométriquement configurée afin d'être symétrique par rapport à un premier plan de symétrie radiale (X1) et l'enroulement (25) est géométriquement configuré afin d'être symétrique par rapport à un second plan de symétrie radiale (X2), le premier plan de symétrie radiale (X1) et le second plan de symétrie radiale (X2) étant décalés l'un par rapport à l'autre le long d'une direction orthogonale à un axe de rotation (Y) du rotor (11) par rapport au stator (20).

**3.** Éolienne (100) incluant un générateur électrique (10) selon l'une quelconque des revendications précédentes.

**4.** Procédé de fabrication d'un générateur électrique (10) comprenant :

- un stator (20) ayant un corps de carcasse (21) et une pluralité de fentes (30) dans le corps de carcasse (21) pour loger un enroulement (25), une pluralité de dents (33) alternant de manière circonférentielle entre la pluralité de fentes (30),
- un rotor (11) agencé pour être rotatif par rapport au stator (20), les fentes (30) ayant au moins une première partie (31) pour loger une cale (40) faisant radialement face au rotor (11) et une seconde partie (32) pour loger l'enroulement (25) de manière adjacente à la première partie (31), l'enroulement (25) étant logé dans la seconde partie (32) de la fente,

la première partie (31) et la seconde partie (32) étant décalées l'une par rapport à l'autre d'une manière telle qu'au moins une partie du corps de carcasse (21) est radialement interposée entre l'enroulement (25) et le rotor (11),
une partie supérieure (34) de la seconde partie (32) directement reliée à la première partie (31) est déformée dans la même direction du décalage de la première partie (31) de la fente,
**caractérisé en ce que** la partie supérieure (34) est radialement interposée entre l'enroulement (25) et le rotor (11).

**5.** Procédé de fabrication d'un générateur électrique (10) selon la revendication 4, dans lequel le procédé inclut l'étape d'obtention des dents (33) par stratification.

FIG 1
100
104
108
14
11
16
20
102
Y
Y
103
109
15
10
104

FIG 2

X2
X1
20
11
16
31
33
33
40
30
25
32
21

FIG 3

11
40
$C_{wr}$
31
$C_{wf}$
34
25
32
21

FIG 4

200
25
Cwr
Cwf
11
Vcm
Cb
Crf
Cb
Vb
21

FIG 5
PRIOR ART

X1=X2
11
Cwr
Cwr
25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050110361 A1
- EP 2822157 A1